Europäisches Patentamt

European Patent Office

Office européen des brevets

(11) Publication number: **0 255 770 B1**

(12) **EUROPEAN PATENT SPECIFICATION**

(45) Date of publication of patent specification: **26.08.92**

(21) Application number: **87306562.7**

(22) Date of filing: **24.07.87**

(51) Int. Cl.⁵: **C01B 33/34**, C01B 33/32, C01B 33/20, C01G 17/00, C01G 49/00

(54) **Zeolite synthesis.**

(30) Priority: **31.07.86 GB 8618773**

(43) Date of publication of application:
**10.02.88 Bulletin 88/06**

(45) Publication of the grant of the patent:
**26.08.92 Bulletin 92/35**

(84) Designated Contracting States:
**BE DE FR GB IT NL**

(56) References cited:
**EP-A- 0 040 016      EP-A- 0 091 048
EP-A- 0 107 370      US-A- 3 459 676
US-A- 4 495 303      US-A- 4 544 538**

(73) Proprietor: **IMPERIAL CHEMICAL INDUSTRIES PLC**
**Imperial Chemical House, Millbank**
**London SW1P 3JF(GB)**

(72) Inventor: **Stewart, Allan**
**75 Farndale Drive Pinehills**
**Guisborough Cleveland(GB)**

(74) Representative: **Chapman, Kenneth Hazel et al**
**Imperial Chemical Industries PLC Legal Department: Patents P.O. Box 6 Bessemer Road**
**Welwyn Garden City Herts, AL71HD(GB)**

Rank Xerox (UK) Business Services

## Description

The present invention relates to a novel and improved synthesis of the zeolite designated Nu-3.

Aluminosilicate zeolites are now widely used in industry. Some occur only in nature, others are only available as a result of chemical synthesis and some are available in both natural and synthetic forms. Synthetic zeolites are attracting more and more attention and it is becoming more and more possible to control the preparation of such zeolites and to tailor their properties to particular needs.

In recent years much attention has been focussed on so-called "high silica" zeolites, that is zeolites which have a silica to alumina mole ratio which is greater than about 5:1. Many such zeolites have been described, among them the zeolite which has been designated "Nu-3".

Zeolite Nu-3 and a method for its synthesis have been described in our European Patent No 40016 where Nu-3 is defined as having a composition expressed in terms of mole ratios of oxides of:

0.5 to 1.5 $R_2O$ : $Y_2O_3$ : at least 5 $XO_2$ : 0 to 400 $H_2O$

wherein R is a monovalent cation or 1/n of a cation of valency n where n is a whole number of 2 or more, X is silicon and/or germanium, Y is one or more of aluminium, iron and/or gallium and $H_2O$ is water of hydration additional to water notionally present when R is H, the zeolite having an X-ray diffraction pattern substantially as set out in Table 1.

### Table 1

| dÅ | I | dÅ | I |
|---|---|---|---|
| 11.3 ± 0.2 | w | 3.77 ± 0.06 | w → m |
| 10.1 ± 0.2 | w → m | 3.66 ± 0.06 | w → m |
| 8.0 ± 0.14 | m → vs | 3.54 ± 0.06 | w |
| 7.65 ± 0.14 | w → m | 3.42 ± 0.06 | w → m |
| 6.56 ± 0.14 | w → vs | 3.28 ± 0.05 | w → m |
| 5.71 ± 0.12 | w | 3.18 ± 0.05 | w |
| 5.54 ± 0.10 | w | 3.12 ± 0.05 | s |
| 5.09 ± 0.10 | m → vs | 3.03 ± 0.05 | w |
| 4.97 ± 0.09 | w | 2.98 ± 0.05 | w → m |
| 4.75 ± 0.08 | w | 2.81 ± 0.05 | w |
| 4.66 ± 0.08 | w | 2.75 ± 0.05 | m → s |
| 4.61 ± 0.08 | w → s | 2.59 ± 0.04 | w |
| 4.42 ± 0.08 | w | 2.50 ± 0.03 | w |
| 4.32 ± 0.08 | w → m | 2.07 ± 0.03 | w |
| 4.21 ± 0.08 | s → vs | 2.01 ± 0.03 | w |
| 4.02 ± 0.07 | vs | 1.90 ± 0.02 | w |
| 3.95 ± 0.07 | w | 1.86 ± 0.02 | w |
| 3.80 ± 0.07 | m → s | | |

vs = 60 to 100  m = 20 to 40

s  = 40 to 60  w = 0 to 20

Our European Patent No 40,016 also describes a method of making zeolite Nu-3 which comprises reacting an aqueous mixture comprising at least one oxide $XO_2$, at least one oxide $Y_2O_3$ and at least one optionally substituted quinuclidinium ion.

We have now surprisingly found that Nu-3 can be readily synthesised from a reaction mixture in which the organic component is a cheaper organic compound than quinuclidinium compounds.

Accordingly the present invention is a method for the preparation of zeolite Nu-3 which comprises reacting an aqueous mixture comprising a source of at least one oxide $XO_2$, at least one oxide $Y_2O_3$, at least one oxide $M_2O$ and at least one optionally substituted adamantanamine, where X is silicon and/or germanium, Y is one or more of aluminium, iron or gallium and M is one or more alkali metals and/or ammonium.

Preferably the reaction mixture has the molar composition:

$XO_2/Y_2O_3$     in the range 5:1 to 50:1, more preferably 8:1 to 40:1, most preferably 10:1 to 30:1

$MOH/XO_2$     in the range $10^{-8}$:1 to 0.5:1, more preferably $10^{-6}$:1 to 0.35:1, most preferably $10^{-4}$:1 to 0.30:1

$H_2O/XO_2$     in the range 10:1 to 200:1, more preferably 15:1 to 80:1, most preferably 30:1 to 60:1

$Q/XO_2$     in the range 0.03:1 to 4:1, more preferably 0.05 to 1.0:1, most preferably 0.10:1 to 0.6:1

$NZ/XO_2$     in the range 0 to 4.0:1, more preferably 0 to 1.0:1, most preferably 0 to 0.7:1,

where Q is the optionally substituted adamantanamine, $N^+$ is an alkali metal or ammonium ion which may be the same as M or a mixture of M and another alkali metal or ammonium ion necessary to balance the anion $Z^-$ which comprises a strong acid radical added as a salt of $N^+$ or present as the result of an acid form of Q being used, for example an adamantanamine hydrochloride in which case $Z^-$ represents the chloride ion. Other examples of $Z^-$ may include bromide, iodide, sulphate and possibly mixtures of strong acid radicals.

Preferably Q is 1-adamantanamine or a compound thereof. If, for example, the hydrochloride of the amine is used the chloride ion will contribute to the amounts of $Z^-$ and will require $N^+$ to balance the charge.

The use of derivatives of 1-adamantamine in the preparation of zeolite SSZ-13 is described in US Patent 4544538.

The preferred alkali metal (M) is sodium. The preferred oxide $XO_2$ is silica ($SiO_2$) and the preferred oxide $Y_2O_3$ is alumina ($Y_2O_3$).

The silica source can be any of those commonly considered for use in synthesising zeolites, for example powdered solid silica, silicic acid, colloidal silica or dissolved silica. Among the powdered silicas usable are precipitated silicas, especially those made by precipitating from an alkali metal silicate solution, such as the type known as "KS 300" made by AKZO, and similar products, aerosil silicas, fume silicas and silica gels suitably in grades for use in reinforcing pigments for rubber or silicone rubber. Colloidal silicas of various particle sizes may be used, for example 10 to 15 or 40 to 50 microns, as sold under the registered Trade Marks "LUDOX", "NALFLOC", "NALCOAG" and "SYTON". The usable dissolved silicas include commercially available waterglass silicates containing 0.5 to 6.0, especially 2.0 to 4.0 mols of $SiO_2$ per mol of alkali metal oxide, "active" alkali metal silicates as defined in UK Patent 1,193,254, and silicates made by dissolving silica in an alkali metal hydroxide or quaternary ammonium hydroxide or a mixture thereof.

The alumina source is most conveniently sodium aluminate, but can be aluminium, or an aluminium salt, for example the chloride, nitrate or sulphate, an aluminium alkoxide or alumina itself, which should preferably be in a hydrated or hydratable form such as colloidal alumina, pseudoboehmite, boehmite, gamma alumina or the alpha or beta trihydrate.

The reaction mixture is usually reacted under autogenous pressure, optionally with added gas, e.g. nitrogen, at a temperature between 85 and 250°C until crystals of zeolite Nu-3 form, which can be from 1 hour to many months depending on the reactant composition and the operating temperature. Agitation is optional, but is preferable since it reduces the reaction time and should improve mixing and overall homogeneity.

At the end of the reaction, the solid phase is collected on a filter and washed and is then ready for further steps such as drying, calcination, dehydration and ion-exchange.

The product of the reaction will contain alkali metal ions, and these have to be at least partly removed in order to prepare the hydrogen form of Nu-3. This can be done by ion exchange with an acid, especially a strong mineral acid such as hydrochloric acid or by way of the ammonium compound, made by ion exchange with a solution of an ammonium salt such as ammonium chloride. Ion exchange can be carried out by slurrying once or several times with the ion-exchange solution. The zeolite is usually calcined before ion exchange to remove the organic compound(s) occluded during synthesis. Removal of such material normally facilitates ion exchange.

In general the cation(s) of zeolite Nu-3 prepared according to this invention can be replaced by any cation(s) of metals, and particularly those in Groups IA, IB, IIA, IIB, III (including rare earths) VIII (including noble metals) and by lead, tin, and bismuth. 5 (The Periodic Table is in "Abridgements of Specifications" published by the UK Patent Office). Exchange is carried out using any water soluble salts containing the appropriate cation.

The method of the invention is particularly suited to the preparation of large crystallite size forms of zeolite Nu-3 with crystallite sizes often of the order of tens of micrometres and with $SiO_2/Al_2O_3$ ratios in the range 10 to 40. The Applicants have also found that other zeolites as well as non-zeolitic crystalline aluminosilicates and pure silica materials can be prepared from reaction mixtures which contain adamantanamine compounds. Two such materials and their preparation are described in British Patent Specification Nos 2193202 and 2193490. Those skilled in the art of zeolite synthesis will be aware that many factors may influence the course of the reaction and the nature of the product obtained. Such factors may include the choice of alkali metal, if any, in the reaction mixture, the alkali/$SiO_2$ mole ratio, the $SiO_2/Al_2O_3$ ratio, the use or not of agitation and the degree of agitation, the reaction temperature, the amount of organic compound present, the dilution of the reaction mixture, the length of reaction and so on.

The Applicants have found that zeolite Nu-3 can be prepared in substantially pure form by the method of this invention from a reaction mixture whose composition conforms to the most preferred ranges of components set out in this specification. We have found that substantially pure Nu-3 can still be obtained from reaction mixtures in which one or more of the compositional mole ratios is in the preferred or more preferred ranges although it is usually necessary to ensure that the $XO_2/Y_2O_3$ and $MOH/XO_2$ mole ratios are in the most preferred ranges. The influence of reaction temperature becomes much more marked at the extremes of the wide preferred ranges of molar ratios and we have noted that in such cases the use of higher temperatures, rather than the more usual 180° and below, causes the yield of Nu-3 to fall away and the yield of other crystalline species to increase. Those skilled in the art will be aware of similar phenomena in the synthesis of other zeolites and will also realise that even in the wider ranges of mole ratios, many combinations of mole ratios will still give zeolite Nu-3 as the major componenet of the product and that in some cases pure Nu-3 will be obtained.

The following examples illustrate the method of this invention.

The X-ray diffraction data reported in the examples were obtained with a Philips APD 1700 automated X-ray diffraction system, using Cu $K\alpha$-radiation from a long fine focus X-ray tube operating at 40 kV and 50 mA (The radiation was monochromatised by a curved graphite crystal adjacent to the detector). An automatic theta-compensating divergence slit was used with a 0.1 mm receiving slit and data collected between 1° and 60° 2-theta with a step-scan size of 0.02° 2-theta. Intensities were measured as peak heights above background from a packed powder bed of specimen.

Example 1

This example illustrates the synthesis of sodium adamantanamine Nu-3 and its conversion to the hydrogen form. This example uses 1-adamantanamine (AN).

The synthesis mixture had the following molar composition ratios:

$3.21Na_2O : 20 AN : 2 Al_2O_3 : 60SiO_2 : 2400H_2O$.

37.8 g 1-adamantanamine was dispersed in 152 g colloidal silica (Syton X30) and then 350 g water was added to give Mixture A. 7.02 g sodium aluminate ("Technical" grade, British Drug Houses, of molar composition 1.229 $Na_2O : Al_2O_3 : 5.70H_2O$) was added to 83.6 g water to give Mixture B.

Mixture B was added to Mixture A with stirring at room temperature and the resulting mixture was stirred for 30 minutes before charging to a 1 litre capacity stainless steel autoclave. After sealing the autoclave, the reaction mixture was heated to 180°C and maintained at that temperature under autogeneous pressure for 207 hours with stirring at approximately 500 rpm. At the end of this time, the reactor and its contents were cooled to room temperature and discharged. The product was filtered and washed thoroughly with deionised water (about 2 litres) and the resulting solid was dried in an oven at 110°C overnight. The yield was about 32.5 g.

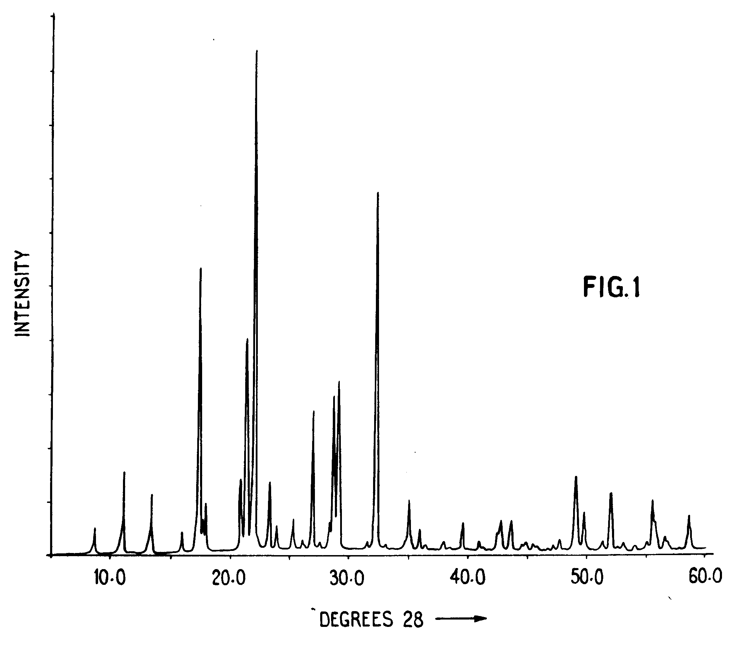

The X-ray diffraction pattern of this solid is shown in Figure 1 and Table 2 and shows it to be zeolite Nu-3. Chemical analysis of the product showed it to contain the following elements at the levels given :- Carbon 13.7 wt%, Nitrogen 1.9 wt%, Silicon 31.4wt%, Aluminium 2.00 wt% and Sodium 0.34 wt %. Calculation shows the product to have a $SiO_2/Al_2O_3$ molar ratio of about 30.

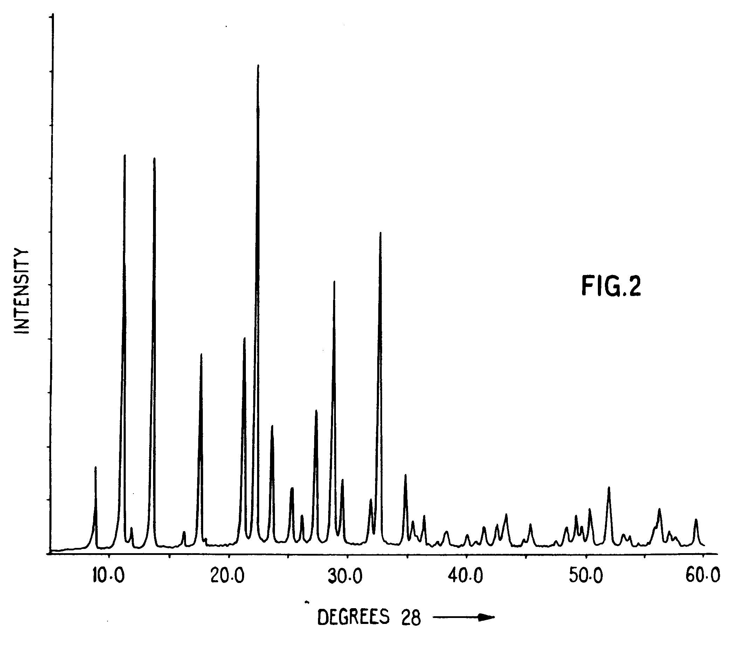

The hydrogen form of Nu-3 was prepared by calcining 10 g of the dried solid from the above preparation in air in a muffle furnace at 500°C for 48 hours, and then exchanging twice at ambient temperature with 1 M hydrochloric acid solution (about 100 $cm^3$) for 2 hours, filtering and washing thoroughly with deionised water before finally drying at 110°C for 16 hours. The X-ray diffraction pattern for this form is shown in Figure 2 and Table 3. Chemcial analysis of this material showed that the carbon, nitrogen and sodium levels had been very substantially reduced, showing that the material was predominantly in the hydrogen form. For the following elements wt % values are given :-

Carbon<0.2 wt %, Nitrogen<0.2 wt %, Silicon 32.7 wt %, Aluminium 2.71 wt % and Sodium 0.006 wt %. Calculation shows the hydrogen form made in the above fashion to have a $SiO_2/Al_2O_3$ molar ratio of about 23.

### Table 2

### X-ray Diffraction Data for "As-made" Product of Example 1

| $d(\overset{o}{A})$ | $I/Io$ | $d(\overset{o}{A})$ | $I/Io$ |
|---|---|---|---|
| 7.96 | 16.5 | 2.84 | 1.7 |
| 6.60 | 11.9 | 2.77 | 74.6 |
| 5.54 | 4.2 | 2.59 | 1.9 |
| 5.09 | 58.0 | 2.56 | 10.8 |
| 5.01 | 6.7 | 2.50 | 4.4 |
| 4.93 | 10.0 | 2.37 | 1.9 |
| 4.25 | 14.5 | 2.28 | 5.7 |
| 4.15 | 44.2 | 2.20 | 1.7 |
| 4.03 | 100.0 | 2.13 | 3.6 |
| 3.81 | 13.3 | 2.12 | 6.1 |
| 3.71 | 13.3 | 2.08 | 6.2 |
| 3.51 | 6.1 | 2.02 | 1.5 |
| 3.42 | 2.0 | 2.00 | 1.2 |
| 3.30 | 29.2 | 1.93 | 1.2 |
| 3.24 | 1.5 | 1.91 | 2.2 |
| 3.14 | 5.3 | 1.86 | 15.6 |
| 3.10 | 32.0 | 1.83 | 7.7 |
| 3.07 | 34.1 | | |

## Table 3

X-ray Diffraction Data for H form of Nu-3, as prepared in Example 1

| $d(\overset{o}{A})$ | I/Io | $d(\overset{o}{A})$ | I/Io |
|---|---|---|---|
| 10.06 | 17.0 | 2.57 | 13.6 |
| 7.96 | 77.5 | 2.53 | 5.2 |
| 7.49 | 4.5 | 2.51 | 1.7 |
| 6.51 | 79.7 | 2.47 | 6.3 |
| 5.48 | 3.4 | 2.36 | 2.3 |
| 5.05 | 40.1 | 2.35 | 3.2 |
| 4.93 | 1.8 | 2.25 | 2.5 |
| 4.19 | 43.2 | 2.18 | 3.6 |
| 3.99 | 100.0 | 2.13 | 4.6 |
| 3.77 | 23.9 | 2.10 | 3.7 |
| 3.53 | 11.6 | 2.09 | 6.7 |
| 3.41 | 5.5 | 2.02 | 1.4 |
| 3.27 | 28.2 | 2.00 | 4.9 |
| 3.10 | 54.9 | 1.91 | 1.1 |
| 3.02 | 13.2 | 1.88 | 4.2 |
| 2.80 | 9.5 | 1.85 | 6.3 |
| 2.74 | 64.2 | 1.84 | 4.0 |

The changes observed in the X-ray diffraction pattern in going from the "as-made" form (Figure 1) to the hydrogen form (Figure 2) are consistent with changes in the lattice parameters of the unit cell caused by removal of the organic species and/or the sodium ions present in the "as-made" form. The type of cell which has been proposed for zeolite Nu-3 (ref 1) is of rhombohedral symmetry and the changes in going from the "as-made" form to the hydrogen form are consistent with a contraction of the hexagonal cell parameter, $a_{hex}$, and an enlargement of the hexagonal cell parameter, $c_{hex}$.

Reference 1 :     J L Casci and T V Whittam, "Zeolites - Synthesis, Structure, Technology and Application", B Drzaj, S Hocevar, S Rejovnik (Editors) Elsevier, Amsterdam (1985) p 623.

Example 2

This example illustrates the synthesis of sodium adamantanamine (AN) Nu-3 with a low $SiO_2/Al_2O_3$ ratio using 1-adamantanamine hydrochloride (AN.HC1).

The synthesis mixture had the following molar composition ratios:

$5Na_2O, 20AN, 5Al_2O_3, 60SiO_2, 20NaCl, 2400H_2O$.

31.3 g AN.HCL was dispersed in 101.5 g colloidal silica (Syton X30) and then 200 g water was added to give Mixture A. 5.34 g NaOH was added to 11.7 g sodium aluminate ("Technical" grade, British Drug Houses, of molar composition 1.229 $Na_2O$ : $Al_2O_3$ : $5.7OH_2O$) and and the mixture added to 88.9 g water to give Mixture B.

Mixture B was added to Mixture A with stirring at room temperature and the resulting mixture was stirred for 30 minutes before charging to a 1 litre capacity stainless steel autoclave. After sealing the autocalve, the reaction mixture was heated to 180°C and maintained at that temperature under autogenous pressure for 9 days with stirring at approxiately 500 rpm. At the end of this time, the reactor and its contents were cooled to room temperature and discharged. The product was filtered and washed thoroughly with deionised water (about 2 litres) and the resulting solid was dried in an oven at 110°C overnight. The yield was about 36.5 g.

The X-ray diffraction pattern of this solid (see Table 4) showed it to be very pure Nu-3. Chemical analysis of the product showed it to contain the following elements at the levels given :-

Silicon 27.0 wt %, Aluminium 4.76 wt % and Sodium 2.64 wt %. Calculation shows the product to have a $SiO_2/Al_2O_3$ molar ratio of about 11.

TABLE 4

| X-ray Diffraction Data for "As-made" Product of Example 2 | | | |
|---|---|---|---|
| d(Å) | I/Io | d(Å) | I/Io |
| 10.19 | 6.7 | 2.78 | 75.0 |
| 8.01 | 22.7 | 2.68 | 2.0 |
| 7.49 | 2.4 | 2.58 | 15.8 |
| 6.61 | 16.7 | 2.50 | 8.4 |
| 5.57 | 8.4 | 2.41 | 2.2 |
| 5.10 | 44.2 | 2.38 | 5.0 |
| 4.95 | 5.2 | 2.28 | 5.4 |
| 4.84 | 1.6 | 2.21 | 5.9 |
| 4.26 | 15.3 | 2.14 | 4.2 |
| 4.18 | 43.8 | 2.12 | 8.6 |
| 4.04 | 100.0 | 2.09 | 7.4 |
| 3.82 | 15.8 | 2.03 | 2.7 |
| 3.74 | 5.2 | 1.90 | 2.1 |
| 3.53 | 8.4 | 1.87 | 17.2 |
| 3.42 | 16.0 | 1.84 | 9.8 |
| 3.31 | 27.4 | | |
| 3.25 | 2.4 | | |
| 3.12 | 36.4 | | |
| 3.09 | 37.9 | | |
| 2.91 | 5.6 | | |
| 2.84 | 3.0 | | |

Example 3

This example illustrates the synthesis of a mixture of sodium adamantanamine Nu-3 and sodium adamantanamine Sigma-1 using 1-adamantanamine (AN). The latter zeolite and its preparation is described in British Patent Specification No 2193202.

The synthesis mixture had the following molar composition ratios:

$3.21Na_2O$, 20AN, $1.5Al_2O_3$. $60SiO_2$, $2400H_2O$.

25.2 g 1-adamantanamine was dispersed in 101.5 g colloidal silica (Syton X30) and then 200 g water was added to give Mixture A. 0.35 g NaOH was added to 3.51 g sodium aluminate ("Technical" grade, British Drug Houses, of molar composition $1.229Na_2O : Al_2O_3 : 5.7OH_2O$) and then 88.9 g water was added to give Mixture B.

Mixture B was added to Mixture A with stirring at room temperature and the resulting mixture was stirred for 30 minutes before charging to a 1 litre capacity stainless steel autocalve. After sealing the autoclave, the reaction mixture was heated to 180°C and maintained at that temperature under autogenous pressure for 8 days with stirring at approxiately 500 rpm. At the end of this time, the reactor and its contents were cooled to room temperature and discharged. The product was filtered and washed thoroughly with deionised water (about 2 litres) and the resulting solid was dried in an oven at 110°C overnight. The yield was about 30 g.

The chemical analysis of this solid product showed it to contain the following elements at the levels given :-

Carbon 12.6 wt %, Nitrogen 1.6 wt %, Silicon 31.4 wt %, Aluminium 1.77 wt % and Sodium 0.21 wt %. Calculation shows the product mixture to have a $SiO_2/Al_2O_3$ molar ratio of about 34.

The X-ray diffraction pattern of the solid product showed it to contain approximately equal proportions of zeolite Sigma-1 and zeolite Nu-3.

While the other relative ratios had been very closely maintained to the values in Example 1, the use of a lower relative amount of aluminium under otherwise similar conditions to those of Example 1 had over 8 days produced a mixture of two zeolites, namely Sigma-1 and Nu-3. Since even lower amounts produce Sigma-1 in pure form the ratios and conditions must be close to the transition range between those favouring the production of the individual zeolites.

Example 4

This example illustrates the synthesis of sodium adamantanamine Nu-3 at 200°C. This example uses 1-adamantanamine (AN).

The synthesis mixture had the following molar composition ratios:

$2.51 Na_2O : 20 AN : 1.99 Al_2O_3 : 60 SiO_2 : 2400 H_2O$.

25.2 g 1-adamantanamine was dispersed in 87.6 g colloidal silica (Nalfloc 1034-A) and then 200 g water was added to give Mixture A. 4.72 g sodium aluminate ("Technical" grade, British Drug Houses, of molar composition $1.26 Na_2O : Al_2O_3 : 5.78 H_2O$) was added to 102.4 g water to give Mixture B.

Mixture B was added to Mixture A with stirring at room temperature and the resulting mixture was stirred for 30 minutes before charging to a 1 litre capacity stainless steel autoclave. After sealing the autoclave, the reaction mixture was heated to 200°C and maintained at that temperature under autogenous pressure for 64 hours with stirring at approximately 500 rpm. At the end of this time, the reactor and its contents were cooled to room temperature and discharged. The product was filtered and washed thoroughly with deionised water (about 2 litres) and the resulting solid was dried in an oven at 110°C overnight. The yield was about 32 g.

The X-ray diffraction pattern of this solid showed it to be zeolite Nu-3. Chemical analysis of the product showed it to contain the following elements at the levels given: Carbon 13.0 wt %, Nitrogen 1.7 wt %, Silicon 29.1 wt %, Aluminium 2.21 wt % and Sodium 0.35 wt %. Calculation shows the product to have a $SiO_2/Al_2O_3$ molar ratio of about 25.

**Claims**

1. A method for the preparation of zeolite Nu-3 which comprises reacting an aqueous mixture comprising a source of at least one oxide $XO_2$, at least one oxide $Y_2O_3$, at least one oxide $M_2O$ and at least one optionally substituted adamantanamine, where X is silicon and/or germanium, Y is one or more of aluminium, iron or gallium and M is one or more alkali metals and/or ammonium.

2. A method as claimed in claim 1 wherein the reaction mixture has the molar composition:

   $XO_2/Y_2O_3$     in the range 5:1 to 50:1

   $MOH/XO_2$     in the range $10^{-8}$:1 to 0.5:1

   $H_2O/XO_2$     in the range 10:1 to 200:1

   $Q/XO_2$     in the range 0.03:1 to 4:1

   $NZ/XO_2$     in the range 0 to 4.0:1

   where Q is the optionally substituted adamantanamine, $N^+$ is an alkali metal or ammonium ion which may be the same as M or a mixture of M and another alkali metal or ammonium ion necessary to balance the anion $Z^-$ which comprises a strong acid radical added as a salt of $N^+$ or present as the result of an acid form of Q being used.

3. A method as claimed in claim 2 wherein the reaction mixture has the molar composition:

   $XO_2/Y_2O_3$     in the range 10:1 to 30:1

   $MOH/XO_2$     in the range $10^{-4}$:1 to 0.30:1

   $H_2O/XO_2$     in the range 10:1 to 200:1

   $Q/XO_2$     in the range 0.03:1 to 4:1

   $NZ/XO_2$     in the range 0 to 4.0:1

**4.** A method as claimed in claim 2 wherein the reaction mixture has the molar composition:

| | |
|---|---|
| $XO_2/Y_2O_3$ | in the range 10:1 to 30:1 |
| $MOH/XO_2$ | in the range $10^{-4}$:1 to 0.30:1 |
| $H_2O/XO_2$ | in the range 30:1 to 60:1 |
| $Q/XO_2$ | in the range 0.10:1 to 0.6:1 |
| $NZ/XO_2$ | in the range 0 to 0.7:1 |

**5.** A method as claimed in any one of the preceding claims wherein the adamantanamine compound is 1-adamantanamine or a compound thereof.

## Patentansprüche

**1.** Verfahren zur Herstellung des Zeoliths Nu-3, bei dem eine wäßrige Mischung, die eine Quelle mindestens eines Oxids $XO_2$, mindestens eines Oxids $Y_2O_3$, mindestens eines Oxids $M_2O$ und mindestens eines wahlweise substituierten Adamantanamins, worin X Silicium und/oder Germanium ist, Y ein oder mehr als ein aus Aluminium, Eisen und Gallium ausgewähltes Metall ist und M ein oder mehr als ein Alkalimetall und/oder Ammonium ist, enthält, zur Reaktion gebracht wird.

**2.** Verfahren nach Anspruch 1, bei dem die Reaktionsmischung die molare Zusammensetzung:

| | |
|---|---|
| $XO_2/Y_2O_3$ | im Bereich von 5:1 bis 50:1 |
| $MOH/XO_2$ | im Bereich von $10^{-8}$:1 bis 0,5:1 |
| $H_2O/XO_2$ | im Bereich von 10:1 bis 200:1 |
| $Q/XO_2$ | im Bereich von 0,03:1 bis 4:1 |
| $NZ/XO_2$ | im Bereich von 0 bis 4,0:1 |

hat, worin Q das wahlweise substituierte Adamantanamin ist, $N^+$ ein Alkalimetall- oder Ammoniumion ist, das dasselbe wie M oder eine Mischung aus M und einem anderen Alkalimetall- oder Ammoniumion sein kann, das notwendig ist, um das Anion $Z^-$ zu kompensieren, das aus einem Rest einer starken Säure besteht, der als ein Salz von $N^+$ zugesetzt oder als Folge der Verwendung einer sauren Form von Q vorhanden ist.

**3.** Verfahren nach Anspruch 2, bei dem die Reaktionsmischung die molare Zusammensetzung:

| | |
|---|---|
| $XO_2/Y_2O_3$ | im Bereich von 10:1 bis 30:1 |
| $MOH/XO_2$ | im Bereich von $10^{-4}$:1 bis 0,30:1 |
| $H_2O/XO_2$ | im Bereich von 10:1 bis 200:1 |
| $Q/XO_2$ | im Bereich von 0,03:1 bis 4:1 |
| $NZ/XO_2$ | im Bereich von 0 bis 4,0:1 |

hat.

**4.** Verfahren nach Anspruch 2, bei dem die Reaktionsmischung die molare Zusammensetzung:

| | |
|---|---|
| $XO_2/Y_2O_3$ | im Bereich von 10:1 bis 30:1 |
| $MOH/XO_2$ | im Bereich von $10^{-4}$:1 bis 0,30:1 |
| $H_2O/XO_2$ | im Bereich von 30:1 bis 60:1 |
| $Q/XO_2$ | im Bereich von 0,10:1 bis 0,6:1 |
| $NZ/XO_2$ | im Bereich von 0 bis 0,7:1 |

hat.

**5.** Verfahren nach einem der vorhergehenden Ansprüche, bei dem die Adamantanaminverbindung 1-Adamantanamin oder eine Verbindung davon ist.

## Revendications

**1.** Procédé pour la préparation de zéolite Nu-3 qui comprend la réaction d'un mélange aqueux comprenant une source d'au moins un oxyde $HO_2$ , d'au moins un oxyde de $Y_2O_3$, d'au moins un oxyde $M_2O$ et d'au moins une adamantanamine éventuellement substituée, où X est un atome de silicium et/ou de germanium, Y est un ou plusieurs atomes parmi les atomes d'aluminium, de fer ou de gallium et M est un ou plusieurs métaux alcalins et/ou ammonium.

**2.** Procédé suivant la revendication 1, dans lequel le mélange réactionnel présente la composition molaire

:

| | |
|---|---|
| $XO_2/Y_2O_3$ | dans la gamme de 5:1 à 50:1 |
| $MOH/XO_2$ | dans la gamme de $10^{-8}$:1 à 0,5:1 |
| $H_2O/XO_2$ | dans la gamme de 10:1 à 200:1 |
| $Q/XO_2$ | dans la gamme de 0,03:1 à 4:1 |
| $NZ/XO_2$ | dans la gamme de 0 à 4,0:1 |

où Q est l'adamantanamine éventuellement substituée, $N^+$ est un métal alcalin ou un ion ammonium qui peut être le même que M ou un mélange de M et d'un autre métal alcalin ou de l'ion ammonium nécessaire pour équilibrer l'anion $Z^-$ qui comprend un radical d'acide fort ajouté sous forme de sel de $N^+$ ou présent en tant que résultat de l'utilisation d'une forme acide de Q.

3. Procédé suivant la revendication 2, dans lequel le mélange réactionnel a la composition molaire :

| | |
|---|---|
| $XO_2/Y_2O_3$ | dans la gamme de 10:1 à 30:1 |
| $MOH/XO_2$ | dans la gamme de $10^{-4}$:1 à 0,30:1 |
| $H_2O/XO_2$ | dans la gamme de 10:1 à 200:1 |
| $Q/XO_2$ | dans la gamme de 0,03:1 à 4:1 |
| $NZ/XO_2$ | dans la gamme de 0 à 4,0:1. |

4. Procédé suivant la revendication 2, dans lequel le mélange réactionnel a la composition molaire :

| | |
|---|---|
| $XO_2/Y_2O_3$ | dans la gamme de 10:1 à 30:1 |
| $MOH/XO_2$ | dans la gamme de $10^{-4}$:1 à 0,30:1 |
| $H_2O/XO_2$ | dans la gamme de 30:1 à 60:1 |
| $Q/XO_2$ | dans la gamme de 0,10:1 à 0,6:1 |
| $NZ/XO_2$ | dans la gamme de 0 à 0,7:1 |

5. Procédé suivant l'une quelconque des revendications précédentes, dans lequel le composé d'adamantanamine est la 1-adamantanamine ou un composé de celle-ci.

FIG.1

DEGREES 2θ ⟶

INTENSITY

FIG.2

DEGREES 2θ →

INTENSITY